# EUROPÄISCHE PATENTANMELDUNG

(11) **EP 0 668 684 A1**
(43) Veröffentlichungstag der Anmeldung: **23.08.1995**
(21) Anmeldenummer: 95102018.9
(22) Anmeldetag: 14.02.1995
(51) Int. Cl.: H04M 1/02

(54) **Kartentelefon für Tisch- und Wandbetrieb**

(30) Priorität: 18.02.1994 DE 9402718 U
(71) Anmelder: SIEMENS AKTIENGESELLSCHAFT, 80333 München (DE)
(72) Erfinder: Grassl, Erwin, D-82541 St. Heinrich (DE); Ludwig, Max, Dipl.-Ing. (FH), D-81375 München (DE)

(57) **Zusammenfassung**

Aus einem Gehäuseoberteil (2) und einer Bodenwanne (3) bestehendes Kartentelefon (1). Das Kartentelefon (1) soll auf einfache Weise für beide Betriebsarten umrüstbar sein. Zur Umstellung des Kartentelefons von Tisch- auf Wandbetrieb wird die Bodenwanne (3) um 180 zum Gehäuseoberteil (2) gedreht.

## Beschreibung

Die vorliegende Erfindung beinhaltet ein Kartentelefon für Tisch- und Wandbetrieb, bestehend aus einem Bedien- und Anzeigeelemente aufweisenden Gehäuseoberteil und einer mit dem Gehäuseoberteil verbundenen und einen Kartenleser enthaltenden Bodenwanne.

Es ist bereits ein Wertkartentelefon bekannt, das als Tisch- und Wandgerät einsetzbar ist. Die Umrüstung von Tisch- auf Wandbetrieb erfolgt bei diesem Wertkartentelefon in der Weise, daß die im Gehäuseoberteil vorgesehene Tastatur und das Ziffern oder Zeichen anzeigende Display jeweils um 180 gedreht in das Gehäuse eingebaut werden müssen, um eine bedienerfreundliche Anordnung der einzelnen Bedienelemente zu erreichen. Ein derartiger Umbau ist jedoch zeit- und kostenmäßig relativ aufwendig.

Der vorliegenden Erfindung liegt daher die Aufgabe zugrunde, einen Weg aufzuzeigen, durch den die Umrüstung eines Wertkartentelefons auf eine der genannten Betriebsarten einfach und kostengünstig durchführbar ist.

Gemäß der Erfindung wird diese Aufgabe dadurch gelöst, daß zur Umstellung des Kartentelefons von Tisch- auf Wandbetrieb die Bodenwanne um 180 zum Gehäuseoberteil gedreht wird, wobei die Bedien- und Anzeigeelemente bei beiden Betriebsarten dem Benutzer lagerichtig zugeordnet sind.

Durch eine derartige Maßnahme kann je nach gewünschter Betriebsart eine Umrüstung des Wertkartentelefons erfolgen, ohne daß zusätzliche Umbauten einzelner Bedien- oder Anzeigeelemente vorgenommen werden müssen. Die Bedien- und Anzeigeelemente sind in beiden Betriebsarten dem Benutzer stets lagerichtig zugeordnet, d. h. die bei Tisch- und Wandbetrieb vorliegende Anordnung der im Gehäuseoberteil vorgesehenen Elemente ändert sich nicht. Lediglich der innerhalb der Bodenwanne angeordnete Kartenleser ist bei Tischbetrieb im Bereich der dem Benutzer abgewandten Seite der Gehäuseoberfläche angeordnet, während der Kartenleser bei Wandbetrieb dem Benutzer direkt zugewandt ist. Dabei kann der Kartenleser so innerhalb der Bodenwanne vorgesehen sein, daß die Kontaktseite der Karte, d. h. der auf der Karte befindliche Chip in beiden Gebrauchslagen dem Benutzer zugewandt ist, um ein eindeutiges und sicheres Einbringen der Karte zu gewährleisten.

Dabei kann die Bodenwanne aus zwei rechtwinklig zueinander verlaufenden Flächen und diese Flächen verbindenden Seitenwänden bestehen, wobei eine dieser Flächen zur Aufnahme der Anschlußleitungen und der Standfüße dient und wobei ferner diese Fläche bei Tisch- und Wandbetrieb als Auflagefläche dient. Durch eine derartige Gestaltung der Bodenwanne wird erreicht, daß nur eine Fläche als Anlagefläche in beiden Betriebsarten zur Anwendung gelangt, so daß vom Benutzer sowohl bei Tisch- als auch bei Wandbetrieb keine störenden Einzelheiten bezuglich Kabeleinfuhrung oder Standfüße wahrgenommen werden.

Die Erfindung soll im folgenden anhand eines Ausführungsbeispiels näher erläutert werden, wobei nur die im wesentlichen interessierenden Details dargestellt sind.

Es zeigt
Figur 1 das Kartentelefon als Tischgerät in einer Seitenansicht,
Figur 2 das Kartentelefon nach Figur 1 in einer Aufsicht,
Figur 3 das Kartentelefon als Wandgerät in einer Seitenansicht,
Figur 4 das Kartentelefon nach Figur 3 in einer Aufsicht.

Das in den Figuren dargestellte Kartentelefon 1 besteht aus dem Gehäuseoberteil 2 sowie der Bodenwanne 3, die untereinander durch Schrauben, Steckverbinder oder Rastelemente verbunden sein können. Die Bodenwanne 3 besitzt die beiden senkrecht zueinander angeordneten Flächen 4 und 5 sowie die diese Flächen verbindenden Seitenwände 6. Dabei dient die Fläche 4 jeweils als Stand- bzw. Auflagefläche bei Tisch- bzw. bei Wandbetrieb des Kartentelefons 1 und nimmt die der Versorgung des Kartentelefons erforderlichen Kabel sowie die Standfüße auf. Innerhalb der Bodenwanne 3 befindet sich ferner der der Aufnahme und Auswertung einer Chipkarte dienende Kartenleser, von dem der den Einführungsschlitz 7 aufweisende Einschub 8 für die Karte dargestellt ist.

Das Gehäuseoberteil 2 dient zur Aufnahme des Handapparates 9, der Tastatur 10 sowie eines Ziffern oder Zeichen anzeigenden Displays 11. Dabei ist die Anschlußschnur 12 des Handapparates 9 nur angedeutet. Der Handapparat 9 wird bei Wandbetrieb des Kartentelefons 1 in herkömmlicher Weise gehaltert. Diese Halterung kann z. B. durch ein am Gehäuseoberteil im Bereich der Ablagemulde für den Hörbereich des Handapparates 9 vorgesehenes und in die Ablagemulde hineinragendes, nasenförmiges Teil, das in eine Ausnehmung im Hörbereich des Handapparates 9 eingreift, erfolgen.

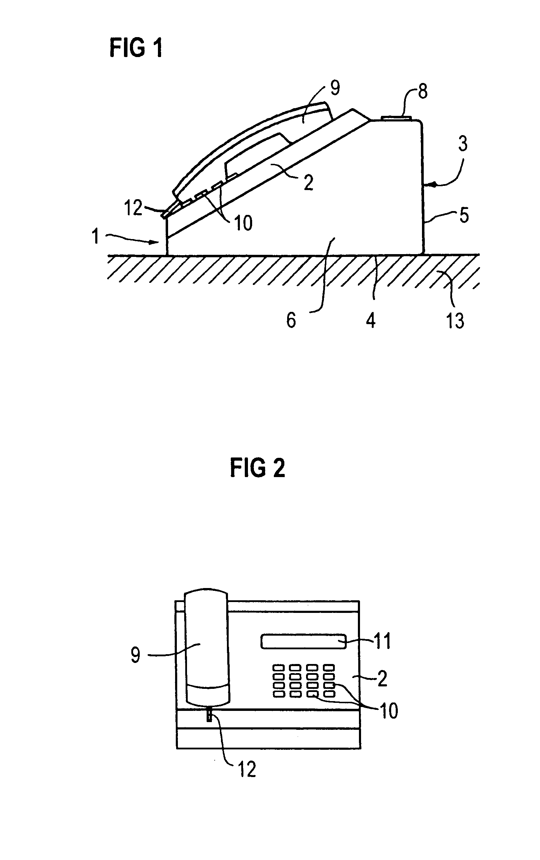

Bei Verwendung des Kartentelefons 1 als auf der Standfläche 13 aufliegendes Tischgerät (Figur 1 und Figur 2) befindet sich der die Chipkarte aufnehmende Einschub des Kartenlesers oberhalb des die Bedien- und Anzeigeelemente aufnehmenden Gehäuseoberteils 2. Die die Kabeleinführung sowie die Gummifüße enthaltende Fläche 4 der Bodenwanne 3 liegt auf der Standfläche 13 auf. Dadurch befinden sich diese Teile auf einer dem Benutzer nicht direkt sichtbaren Fläche des Kartentelefons.

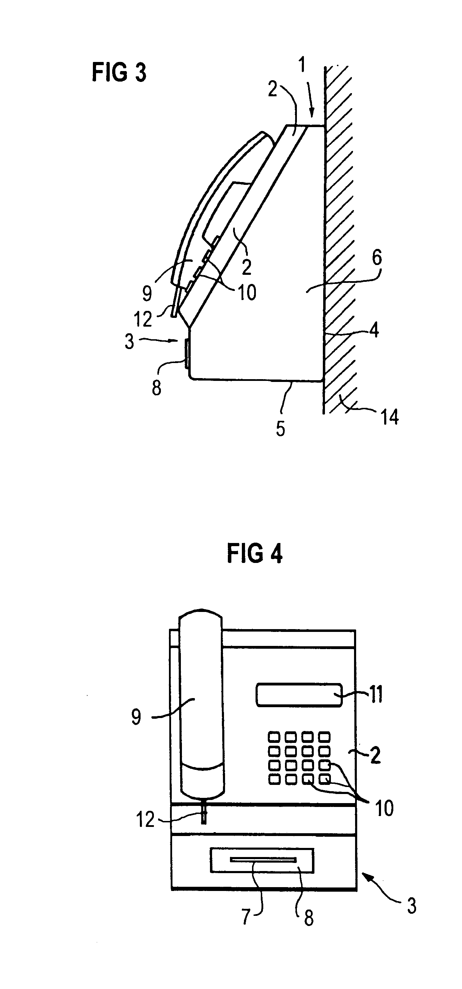

Zur Verwendung des Kartentelefons 1 als Wandgerät (Figur 3 und Figur 4) wird die Bodenwanne 3 um 180 zum Gehäuseoberteil gedreht. Wie aus den Figuren 3 und 4 zu ersehen ist, befindet sich nach dieser Drehung der die Chipkarte aufnehmende Einschub 8 unterhalb des die Bedienelemente 10 und den Handapparat 9 aufnehmenden Gehäuseoberteils 2, d. h., der Einführungsschlitz 7 für die Chipkarte ist bei Verwendung des Kartentelefons 1 als Wandgerät dem Benutzer direkt zugewandt. Bei dieser Verwendungsform des Kartenlesers 1 liegt wiederum die die Zuleitungen sowie die Standfüße aufweisende Fläche 4 direkt an der Wandfläche 14 an.

Durch eine derartige Drehung um 180 der Bodenwanne 3 zum Gehäuseoberteil 2 ist einmal gewährleistet, daß die in dem Gehäuseoberteil 2 angeordneten Bedienteile in Form des Handapparates 9 und der Tastatur 10 sowie der Anzeigebereich in Form des Displays 11 in einer für den Benutzer gleichen Lage verbleiben, wie er sie bei Benutzung des Kartentelefons als Tischgerät vorgefunden hat. Lediglich der Einführungsschlitz 7 des Einschubes 8 ändert dabei seine Lage zum Benutzer. Der Kartenleser kann dabei so innerhalb der Bodenwanne 3 des Kartentelefons 1 vorgesehen werden, daß der auf der Karte befindliche Chip bei Einfuhren der Karte stets dem Benutzer zugewandt ist.

## Patentansprüche

1. Kartentelefon (1) für Tisch- und Wandbetrieb, bestehend aus einem Bedien- und Anzeigeelemente (9, 10, 11) aufweisenden Gehäuseoberteil (2) und einer mit dem Gehäuseoberteil (2) verbundenen und einen Kartenleser enthaltenden Bodenwanne (3), dadurch gekennzeichnet, daß zur Umstellung des Kartentelefons (1) von Tisch- auf Wandbetrieb die Bodenwanne (3) um 180 zum Gehäuseoberteil (2) gedreht wird, wobei die Bedien- und Anzeigeelemente bei beiden Betriebsarten dem Benutzer lagerichtig zugeordnet sind.

2. Kartentelefon nach Anspruch 1, dadurch gekennzeichnet, daß die Bodenwanne (3) aus zwei rechtwinklig zueinander verlaufenden Flächen (4, 5) und sie verbindenden Seitenwänden (6) besteht, wobei eine dieser Flächen (4) zur Aufnahme der Anschlußleitungen und der Standfüße dient und wobei ferner diese Fläche (4) bei Tisch- und Wandbetrieb als Auflagefläche dient.

3. Kartentelefon nach Anspruch 1, dadurch gekennzeichnet, daß das Gehäuseoberteil (2) einstückig ausgebildet ist.
